# EUROPÄISCHE PATENTANMELDUNG

(11) **EP 3 686 701 A1**
(43) Veröffentlichungstag der Anmeldung: **29.07.2020**
(21) Anmeldenummer: 20152798.3
(22) Anmeldetag: 21.01.2020
(51) Int. Cl.: G05B 23/02, A01M 7/00, B05B 12/08

(54) **VERFAHREN ZUR ÜBERWACHUNG EINER AUSGEBRACHTEN SPRITZMITTELMENGE SOWIE SPRITZMITTELEINRICHTUNG HIERZU**

(30) Priorität: 22.01.2019 DE 102019101500
(71) Anmelder: SIKA Dr.Siebert & Kühn GmbH & Co. KG., 34260 Kaufungen (DE)
(72) Erfinder: SIEBERT, Christian, 34131 Kassel (DE); BALAMOUTOFF, Philippe, 92210 st. Cloud (FR)
(74) Vertreter: Patentanwälte Walther Hinz Bayer PartGmbB

(57) **Zusammenfassung**

Verfahren zur Überwachung einer mittels einer verfahrbaren Spritzmitteleinrichtung (100) ausgebrachten Spritzmittelmenge (1) und Spritzmitteleinrichtung (100) hierzu, die zum Auftrag auf in Reihe stehenden Gewächsen (19) dient, wofür das Spritzmittel (1) auf linken und rechten Seiten mit jeweils mindestens einem linken Sprüharm (L, R) aufweisend wenigstens eine linke Sprühdüse (DL1-3, DR1-3 ) auf die Gewächse (19) aufgebracht wird, und wobei das Verfahren wenigstens die folgenden Schritte aufweist:

- Erfassen einer auf den linken und rechten Seiten jeweiligen austretenden Spritzmittelmenge durch jeweils mindestens einen Durchflusssensor (13L, 13R),

- Bereitstellen einer Erfassungseinheit (10),

- Erfassen der durch den jeweiligen Durchflusssensor (13L, 13R) auf der linken und der rechten Seite gemessenen Spritzmittelmengen mit der Erfassungseinheit (10),

- Vergleich der gemessenen Spritzmittelmenge der Sprüharme,

- Erzeugen eines Signals (11) auf einem Anzeigemittel (12), wenn die jeweiligen Werte der Spritzmittelmenge der linken und recthen Sprüharme (L, R) voneinander abweichen.

## Beschreibung

Die Erfindung betrifft ein Verfahren zur Überwachung einer mittels einer Spritzmitteleinrichtung aufgebrachten Menge an Spritzmitteln, insbesondere eines Spritzmittels zum Auftrag auf in Reihe stehenden Gewächsen, wie Weinpflanzen, Obstpflanzen und dergleichen, wofür die Spritzmitteleinrichtung in Verbindung mit einem fahrenden Fahrzeug betrieben wird und das Spritzmittel mit mindestens einem linken Sprüharm, aufweisend wenigstens eine linke Sprühdüse, und mit mindestens einem rechten Sprüharm, aufweisend wenigstens eine rechte Sprühdüse, auf die Gewächse aufgebracht wird.

Die linke und rechte Seite bezieht sich dabei auf die Seiten in Bezug auf eine Fahrrichtung des Fahrzeugs bzw. auf die linke und rechte Seite der in Reihe stehenden Gewächse.

### STAND DER TECHNIK

Beispielsweise offenbart die WO 2016/207559 A1 eine Spritzmitteleinrichtung zur Aufbringung einer Menge an Spritzmitteln auf Weinpflanzen, und die Spritzmitteleinrichtung weist einen linken Sprüharm mit wenigstens einer linken Sprühdüse und einen rechten Sprüharm mit wenigstens einer rechten Sprühdüse auf. Das Beispiel zeigt Sprühdüsen in linker und rechter Anordnung von einem Fahrzeug, an oder auf dem die Spritzmitteleinrichtung aufgebracht ist, wobei alternativ ein linker und rechter Sprüharm auch an nur einer Seite des Aufbaus der Spritzmitteleinrichtung vorhanden sein können, die die Weinpflanzen linksseitig und rechtsseitig besprühen können.

Damit können Spritzmitteleinrichtungen auch so ausgeführt werden, dass beide Sprüharme auf nur einer Seite der Spritzmitteleinrichtung vorhanden sind, und ein linker und ein rechter Sprüharm umschließt jeweils links- und rechtsseitig die Reihe der Gewächse, beispielsweise der Weinpflanzen. An den Sprüharmen sind mehrere Sprühdüsen angeordnet, die in Abhängigkeit der Betriebserfordernis, beispielsweise der aktuellen Pflanzenhöhe oder Pflanzenformation, ein- und ausgeschaltet werden können.

Die Sprühdüsen an den Sprüharmen können abhängig von der Konsistenz des Spritzmittels, das allgemein auch als Brühe bezeichnet wird, einzeln verstopfen, sodass Teile der Gewächse oder sogar mehrere in Reihe stehende Gewächse nicht hinreichend mit Spritzmitteln beaufschlagt werden. Um festzustellen, ob eine Sprühdüse verstopft ist, müssen Landwirte, insbesondere Winzer, anhand einer Düsentabelle einen Vergleich heranziehen, ob die Durchflusswerte und die Druckwerte in den zu den Sprühdüsen führenden Leitungen den Referenzwerten aus der Tabelle entsprechen. Diese direkte Form der Überwachung ist nicht nur umständlich und nur schwer realisierbar in einer Echtzeitumgebung, sondern die Vorgehensweise ist auch an viele Fehlerquellen gekoppelt.

Beispielsweise findet die Druckabnahme nicht direkt an den Sprühdüsen statt, was einen Druckabfall zwischen einem Durchflusssensor und der Sprühdüse bewirkt, und die Erfassung des Durchflusses erfolgt bei den meisten Anlagen überdies mit lediglich einem einzigen Durchflusssensor. Will der Bediener das Sprühverhalten der Sprühdüsen visuell überwachen, ist dieser während der Fahrt des Fahrzeugs abgelenkt, was stets zu vermeiden ist. Zudem ist die visuelle Überwachung des Sprühverhaltens abhängig von den Lichtverhältnissen nicht immer möglich. Auch finden häufig Injektordüsen als Sprühdüsen Anwendung, die das Spritzmittel sehr fein zerstäuben können, wodurch ein Sprühnebel entsteht, der eine visuelle Kontrolle der Funktion sämtlicher Sprühdüsen für den Bediener erschwert oder gar verhindert.

Die erfindungsgemäße Überwachung der Durchflüsse ist insbesondere im Plantagenbau von besonderem Vorteil, da hier, anders als in einer flächigen Besprühung von Bodenpflanzen, sehr gezielt jeder Sprühdüse ein Teil oder ein Abschnitt, insbesondere Höhenabschnitt, des Gewächses zugeordnet ist und eine aufgetragene Mindermenge an Spritzmittel den Ausbruch von bereichsweisen Erkrankungen des Gewächses oder den bereichsweisen Befall mit Schädlingen begünstigen kann. In Abgrenzung zum Feldauftrag von Spritzmitteln gewissermaßen von oben, bei dem eine stärkere Vernebelung des Spritzmittels bis zum Niederschlag auf die Feldpflanze stattfindet, ist bei einem gezielten, lokalen und vorzugsweise horizontalen Besprühen der vorzugsweise in Reihe stehenden Gewächse ein Ausfall bereits einer Sprühdüse dringend zu vermeiden. Die Erfindung findet daher insbesondere aber nicht ausschließlich für den Plantagenbau, und hier insbesondere im Weinanbau, Anwendung.

Aus MEINERS, Hermann [et al.]: Land- und Baumaschinentechnik, 20. Auflage, Hamburg: Handwerk und Technik, 2015, S. 412-421 (ISBN 978-3-582-03126-0) sind in diesem Zusammenhang sogenannte prozessorgesteuerte Pflanzenschutzspritzgeräte bekannt. Derartige Spritzgeräte weisen Arme auf, wobei die Arme mit mehreren Sprühdüsen bestückt sind, wobei jeder Düse ein Durchflusssensor zugeordnet ist. Hierbei wird jede Düse überwacht und dem Fahrer des Spritzgerätes Funktionsstörungen an einzelnen Sprühdüsen angezeigt.

Bei dem Spritzen von Weinrebenreihen muss der Fahrer des Spritzgerätes erhöhte Vorsicht walten lassen, damit es beim Durchfahren der Rebenreihen nicht zu Beschädigungen von Reben kommt. Insofern ist es für den Fahrer des Spritzgerätes während der Fahrt kaum möglich, auf einer Anzeige festzustellen, wenn eine Funktionsstörung an den Sprühdüsen festgestellt wird, welche der vielen Sprühdüsen funktionsgestört ist. Schließlich können Spritzgeräte bis zu 48 Sprühdüsen aufweisen.

### OFFENBARUNG DER ERFINDUNG

Es ist daher die Aufgabe der vorliegenden Erfindung, ein Verfahren zu schaffen, das zur einfachen und zuverlässigen Überwachung einer mittels einer Spritzmitteleinrichtung ausgebrachten Menge an Spritzmitteln auf in Reihe stehenden Gewächsen weitergebildet ist. Eine besondere Aufgabe ist dabei die möglichst einfache Ausführung der Spritzmitteleinrichtung zur Umsetzung einer hierzu dienenden Lösung und es soll eine Echtzeit-Signalgebung an einen Bediener möglich sein, sodass dieser von der Spritzmitteleinrichtung, also in der Regel der Landwirt, insbesondere der Winzer, der das Spritzfahrzeug führt, eine unmittelbare Information über das Sprühverhalten des Spitzgerätes bzw. der Sprühdüsen der mindestens zwei Sprüharme erhält.

Diese Aufgabe wird ausgehend von einem Verfahren gemäß dem Oberbegriff des Anspruches 1 und ausgehend von einer Spritzmitteleinrichtung gemäß dem Oberbegriff des Anspruchs 10 mit den jeweils kennzeichnenden Merkmalen gelöst.

Vorteilhafte Weiterbildungen der Erfindung sind in den jeweils abhängigen Ansprüchen angegeben.

Das erfindungsgemäße Verfahren sieht folgende Schritte vor: Erfassen einer über den mindestens einen linken Sprüharm aktuell austretenden Spritzmittelmenge und einer über den mindestens einen rechten Sprüharm aktuell austretenden Spritzmittelmenge durch jeweils mindestens einen Durchflusssensor; Bereitstellen einer Erfassungseinheit; Erfassen der durch den mindestens einen linken Sprüharm und der über den mindestens einen rechten Sprüharm ausgebrachten Spritzmittelmenge mit der Erfassungseinheit; Vergleich der gemessenen Spritzmittelmenge des mindestens einen linken Sprüharms mit der erfassten Spritzmittelmenge des mindestens einen rechten Sprüharms und Erzeugen eines Signals auf einem Anzeigemittel, wenn der Wert der Spritzmittelmenge des mindestens einen linken Sprüharms und der Wert der Spritzmittelmenge des mindestens einen rechten Sprüharms insbesondere über einen Grenzwert hinaus voneinander abweichen.

Kerngedanke der Erfindung ist die pro Sprüharm, also die links- und rechtsseitig getrennt vorgesehene Überwachung der Spritzmittelmenge, die pro Zeiteinheit über den Sprüharm ausgetragen wird. Die jeweils ausgebrachte Spritzmittelmenge für den mindestens einen linken Sprüharm und für den mindestens einen rechten Sprüharm kann auf jeweils einfache Weise ermittelt werden, und es kann auf ebenso einfache Weise ein Vergleich vorgenommen werden, wie sich die beiden Werte der pro Zeiteinheit ausgebrachten Spritzmittelmengen zueinander verhalten. Weichen die ausgebrachten Spritzmittelmengen für den mindestens einen linken und für den mindestens einen rechten Sprüharm über einen festlegbaren Grenzwert voneinander ab, so wird ein Signal erzeugt, das für den Bediener, also für den Landwirt, insbesondere für den Winzer, der beispielsweise das Fahrzeug führt und an oder auf dem die Spritzmitteleinrichtung installiert ist, erkannt werden kann.

Die Werte der durch den linken Sprüharm und durch den rechten Sprüharm strömenden Spritzmittelmengen können dann voneinander abweichen, wenn die eine Sprühdüse oder zumindest eine von mehreren Sprühdüsen verstopft ist, wodurch die Durchflussmenge an Spritzmittel durch die verstopfte Sprühdüse vermindert ist. Das Signal kann dabei so an den Bediener ausgegeben werden, dass dieser unmittelbar reagieren kann, beispielsweise kann der Bediener das Fahrzeug stoppen und unmittelbar die Spritzeinrichtung vorübergehend außer Betrieb setzen, bis die Störung behoben ist, beispielsweise bis die Verstopfung in der Sprühdüse entfernt wurde.

Das Ermitteln der Spritzmittelmengen in den Sprüharmen wird mit Durchflusssensoren vorgenommen, wobei das Erzeugen des Signals auf dem Anzeigemittel in Echtzeit mit den erfassten Spritzmittelmengen erfolgen kann. Insbesondere ist mit besonderem Vorteil jeder Sprühdüse ein Durchflusssensor zugeordnet, insbesondere in vorgelagerter Anordnung, sodass für jede Sprühdüse die Menge an durchfließenden Spritzmitteln pro Zeiteinheit erfasst werden kann.

Sind am linken Sprüharm mehrere Sprühdüsen angeordnet und sind am rechten Sprüharm mehrere Sprühdüsen angeordnet, können sämtlichen Sprühdüsen jeweilige Durchflusssensoren zugeordnet werden, wobei die Durchflusswerte der mehreren linken Durchflusssensoren zu einem Gesamtwert addiert werden und wobei die Durchflusswerte der mehreren rechten Durchflusssensoren zu einem weiteren Gesamtwert ebenfalls addiert werden, sodass beide Gesamtwerte mittels der Erfassungseinheit erfasst und beispielsweise auch bereits in der Erfassungseinheit miteinander verglichen werden, wobei der Vergleich bevorzugt mittels einer softwarebasierten Anwendung auf dem Anzeigemittel vorgenommen wird.

Das Anzeigemittel, auf dem das Signal erzeugt wird, kann eine Oberfläche mit einem linken Anzeigebereich und mit einem rechten Anzeigebereich aufweisen, wobei das auszugebende Signal auf dem Anzeigebereich erzeugt wird, auf dem auch die Menge des aktuell durchfließenden Spritzmittels vermindert ist.

Ist beispielsweise die Menge an durchfließendem Spritzmittel auf der Seite des mindestens einen rechten Sprüharms vermindert, so erfolgt die Ausgabe des Signals auch auf dem rechten Anzeigebereich des Anzeigemittels. Dadurch kann der Bediener, insbesondere ohne die Erfassung konkreter Zahlenwerte, bereits erkennen, dass eine Differenz der aufgebrachten Spritzmittelmengen pro Zeiteinheit im Vergleich von der linken und der rechten Seite vorherrscht. Insofern besteht die Möglichkeit, für den Bediener unmittelbar zu reagieren, beispielsweise das Fahrzeug anzuhalten und die Spritzmitteleinrichtung vorübergehend außer Betrieb zu setzen, etwa indem eine Pumpe zur Förderung des Spritzmittels aus einem Tank gestoppt wird.

Beispielsweise erfolgt die Ausgabe des Signals einer Fehlfunktion einer oder mehrerer Sprühdüsen mittels eines farbigen Feldes, beispielsweise eines gut wahrnehmbaren Kreises, insbesondere eines farbigen Bereiches im rechten oder linken Anzeigebereich oder der ganze rechte oder linke Anzeigebereich wird alternativ farbig hervorgehoben. Auch besteht die Möglichkeit, das Signal entweder als Dauerfarbanzeige oder als blinkende farbige Anzeige zu gestalten, das heißt, ein einziger Kreis leuchtet z. B. entweder rot oder grün und gibt in denkbar einfacher Weise die Information, dass die Spritzmitteleinrichtung funktionsgestört ist oder nicht. Zudem besteht wahlweise die Möglichkeit, zusätzlich zur Ausgabe eines visuellen Signals ein akustisches Signal mittels eines Lautsprechers im oder am Anzeigemittel zur Anzeige zu bringen.

Das Anzeigemittel ist ferner dazu ausgebildet, die Einzelwerte der mit dem der den Durchflusssensoren erfassten Spritzmitteldurchflussmengen in Echtzeit anzuzeigen. Beispielsweise wird das Anzeigemittel gebildet mittels eines handhaltbaren elektronischen Geräts, insbesondere eines Smartphones oder eines Tablet-PCs, wobei auf dem Anzeigemittel eine softwarebasierte Anwendung, eine sogenannte App, betrieben wird.

In oder auf der App wird die Überwachung der Betriebszustände der Sprühdüsen mittels der Durchflusssensor und insbesondere in Verbindung mit der Erfassungseinheit, vorgenommen. Beispielsweise liefert die Erfassungseinheit Einzelsignale der Durchflussmengen für jede Sprühdüse an die softwarebasierte Anwendung, und die Spritzmitteleinrichtung kann einen Tank umfassen, und die Menge an bevorratetem Spritzmittel im Tank kann ebenfalls zur Anzeige gebracht werden.

Auch besteht die Möglichkeit, dass die App die Förderrate der Pumpe, den Betriebsdruck des Spritzmittels in den Leitungen, die Temperatur, die Fahrgeschwindigkeit des Fahrzeugs und dergleichen anzeigt. Im Vordergrund steht jedoch die Möglichkeit, das Signal beispielsweise bereits direkt auf der Startseite der softwarebasierten Anwendung anzuzeigen, ohne dass der Bediener beispielsweise eine nachgelagerte Oberfläche der softwarebasierten Anwendung öffnen oder in diese wechseln muss, auf der beispielsweise die Einzel-Durchflussraten angezeigt werden, die mit den Durchflusssensoren in Verbindung mit den zugeordneten Sprühdüsen erfasst werden.

Die Erfassungseinheit überträgt gemäß einer weiteren Verbesserung des Verfahrens die Werte der Spritzmitteldurchflussmengen drahtlos und/oder mittels einer Bluetooth-Schnittstelle an das Anzeigemittel. Allgemein besteht damit die Möglichkeit, eine Datenkommunikation zwischen der Erfassungseinheit und dem Anzeigemittel mittels einer Nahfeld-Kommunikation (NFC) umzusetzen. Selbstverständlich besteht zudem die Möglichkeit einer drahtgebundenen Verbindung zwischen der Erfassungseinheit und dem Anzeigemittel.

Der Vergleich der erfassten Spritzmitteldurchflussmengen kann einerseits mit der Erfassungseinheit bereits vorgenommen werden, und der Differenzwert kann an das Anzeigemittel übermittelt werden, und es besteht bevorzugt die Möglichkeit, dass der Vergleich der Werte der Spritzmittelmengen im linken und im rechten Sprüharm in oder mit der softwarebasierten Anwendung auf dem Anzeigemittel, also auf dem Smartphone oder dem Tablet-PC, ausgeführt wird. Hierzu kann eine Vergleicherschaltung vorgesehen sein.

Die Erfindung richtet sich weiterhin auf eine Spritzmitteleinrichtung zum Auftragen einer Menge an Spritzmittel auf in Reihe stehenden Gewächsen, wie Weinpflanzen, Obstpflanzen und dergleichen, wofür mindestens ein linker Sprüharm, aufweisend wenigstens eine linke Sprühdüse, und mindestens ein rechter Sprüharm, aufweisend wenigstens eine rechte Sprühdüse, zum Auftrag des Spritzmittels auf die Gewächse vorgesehen ist.

Erfindungsgemäß ist eine Erfassungseinheit vorgesehen und dazu eingerichtet, die über den mindestens einen linken Sprüharm durch mindestens einen ersten Durchflusssensor gemessene, aktuell austretende Spritzmittelmenge und die über den mindestens einen rechten Sprüharm durch mindestens einen zweiten Durchflusssensor gemessenen, aktuell austretende Spritzmittelmenge zu erfassen, wobei weiterhin ein Anzeigemittel bereitgestellt wird, an das die aktuell erfassbaren Spritzmittelmengen von der Erfassungseinheit übermittelbar sind, wobei die Spritzmittelmenge des mindestens einen linken Sprüharms mit der Spritzmittelmenge des mindestens einen rechten Sprüharms durch eine Vergleicherschaltung in der Erfassungseinheit verglichen werden, und wobei mittels des Anzeigemittels ein Signal ausgebbar ist, wenn der Wert der Spritzmittelmengen des mindestens einen linken Sprüharms und der Wert der Spritzmittelmengen des mindestens einen rechten Sprüharms insbesondere über einen Grenzwert hinaus voneinander abweichen.

Die austretenden Spritzmittelmengen sind in Echtzeit erfasste Ist-Werte des Spritzmitteldurchflusses durch die Sprühdüsen, die insbesondere erfasst werden mittels Durchflusssensoren, die in vorteilhafter Weise Bestandteil der Spritzmitteleinrichtung sind. Dabei kann jeder Sprühdüse oder einer Gruppe von Sprühdüsen ein Durchflusssensor vorgeschaltet sein. Zudem besteht die besonders vorteilhafte Möglichkeit, pro Sprüharm oder pro Sprühseite der Spritzmitteleinrichtung lediglich einen Durchflusssensor zu installieren, beispielsweise nach einer Verzweigung in einer Leitung, die von der Pumpe der Spritzmitteleinrichtung kommt, durch die das Spritzmittel aus dem Tank in die Spritzmittelleitung gespritzt wird. Damit ergäbe sich der Vorteil, lediglich zwei Durchflusssensor installieren zu müssen, nämlich zu jeder Seite nach der Abzweigung der Spritzmittelleitung nur einen. Eine Einzel-Identifikation einer verstopften Sprühdüse ist damit zwar nicht mehr möglich, aber die einfache Information, dass die ausgebrachte Spritzmittelmenge auf der rechten und der linken Seite der Spritzmitteleinrichtung unterschiedlich ist, reicht aus, um den Spritzmittelaustrag abzubrechen.

Wie bereits ausgeführt, können einem Durchflusssensor auch mehrere Sprühdüsen, also eine Gruppe von Sprühdüsen zugeordnet sein; somit ist nicht jeder Düse ein Durchflusssensor zugeordnet, sondern einer Mehrzahl von z. B. drei oder vier Sprühdüsen. Hierzu können ein oder mehrere Düsenarme vorgesehen sein, an denen jeweils mehrere Sprühdüsen als Gruppe angeordnet sein können. Diese Düsenarme sind an den Sprüharmen befestigt und werden von denen mit Spritzmittel versorgt. Diese Anordnung erleichtert die Lokalisierung einer fehlerhaften Düse insofern, als lediglich z. B. ein Vergleich der pro Zeiteinheit ausgebrachten Spritzmittelmenge zwischen zwei insbesondere benachbarten Durchflusssensoren zu erfolgen braucht.

Somit bestehen verschiedene Varianten zur Überprüfung, ob zu beiden Seiten der Spritzmitteleinrichtung die gleiche Menge an Spritzmittel ausgebracht wird.

Die einfachste und preiswerteste erste Variante besteht darin, in jedem Sprüharm, den Sprühdüsen örtlich vorgeordnet, einen eigenen Durchflusssensor vorzusehen. Das heißt, bei beispielsweise zwei Sprüharmen kommen dann zwei Durchflusssensoren zum Einsatz. Erkennbar ist dann bereits durch Vergleich, ob zu beiden Seiten die gleiche Spritzmittelmenge ausgetragen wird.

Um die Lokalisierung einer fehlerhaften Düse zu erleichtern, können alternativ oder additiv zu der obigen Variante nach einer weiteren zweiten Variante Gruppen von Sprühdüsen gebildet werden, denen ein Durchflusssensor zugeordnet ist. Hierbei können dann zur Ermittlung fehlerhafter Sprühdüsen in einer Gruppe, die ausgetragenen Mengen an Spritzmittel zwischen benachbarten Gruppen ermittelt und verglichen werden. Hierdurch kann dann gegebenenfalls eine fehlerhafte Düse einer Gruppe von z. B. drei Düsen zugeordnet werden.

Schließlich kann nach einer dritten Variante auch jeder Düse ein Durchflusssensor zugeordnet werden. Diese dritte Variante kann mit der ersten oder der zweiten Variante gekoppelt werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Ansicht einer Spritzmitteleinrichtung zur Ausführung des erfindungsgemäßen Verfahrens,
- Fig. 2: eine diagrammartige Ansicht der Bestandteile der Spritzmitteleinrichtung zur Ausführung des Verfahrens,
- Fig. 3: zeigt schematisch eine Gruppenbildung von Sprühdüsen, ausgehend von Fig. 1.

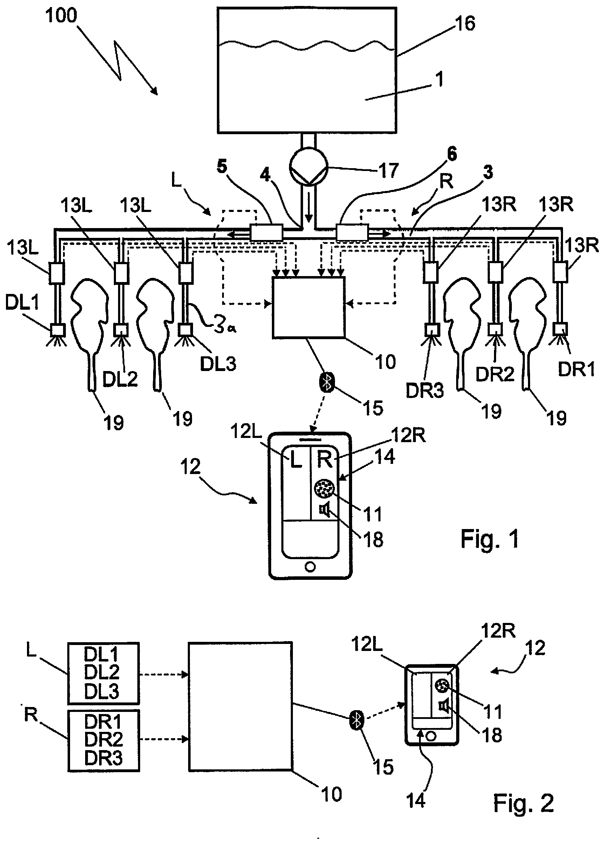

Fig. 1 zeigt in einer schematisierten Ansicht eine Spritzmitteleinrichtung 100 zur Ausführung des erfindungsgemäßen Verfahrens. Die Spritzmitteleinrichtung 100 weist einen Tank 16 auf, in dem eine Menge an Spritzmittel 1 bevorratet ist. Über eine Pumpe 10 kann das Spritzmittel 1 aus dem Tank 16 mehreren Sprühdüsen DL1, DL2 und DL3 an einem linken Sprüharm L und weiteren Sprühdüsen DR1, DR2 und DR3 an einem rechten Sprüharm R zugeführt werden. Der linke Sprüharm L kann sich auf der linken Seite eines Fahrzeugs befinden und der rechte Sprüharm R kann sich auf der rechten Seite eines Fahrzeugs befinden. Auch besteht die Möglichkeit, dass sowohl der linke als auch der rechte Sprüharm L, R auf einer gemeinsamen Seite eines Fahrzeugs mit der Spritzmitteleinrichtung 100 angeordnet sind, wobei die linken und rechten Sprüharme L, R beispielsweise jeweils links und rechts von Gewächsen 19 angeordnet sind und entlang geführt werden, beispielsweise in Reihe stehende Weinpflanzen oder Obstpflanzen. Die Darstellung zeigt beispielhaft vier Reihen von Gewächsen 19, und an jedem der beiden Sprüharme L, R befinden sich drei Sprühdüsen DL1, DL2 und DL3 an dem linken Sprüharm L und drei Sprühdüsen DR1, DR2 und DR3 an dem rechten Sprüharm R.

Ein weiterer Bestandteil der Spritzmitteleinrichtung 100 ist eine Erfassungseinheit 10, mit der der Durchfluss des Spritzmittels 1 durch die Sprühdüsen DL1, DL2, DL3; DR1, DR2 und DR3 bestimmt wird. Hierzu sind den jeweiligen Sprühdüsen DL1, DL2, DL3; DR1, DR2 und DR3 Durchflusssensor 13L und 13R zugeordnet, die jeweils vor den Sprühdüsen gelegen sind. Sämtliche der Durchflusssensor 13L, 13R übertragen einen aktuellen Durchflusswert an die Erfassungseinheit 10.

Weiterhin ist ein Anzeigemittel 12 Bestandteil der Spritzmitteleinrichtung 100, und das Anzeigemittel 12 ist beispielsweise ausgeführt als ein Smartphone oder ein Tablet-PC. Auf dem Anzeigemittel 12 ist eine softwarebasierte Anwendung 14 installiert, die auf dem Anzeigemittel 12 eine Oberfläche zur Anzeige bringt, die beispielsweise unterteilt ist in einen linken Anzeigebereich 12L und einen rechten Anzeigebereich 12R. Der linke Anzeigebereich 12L gibt den aktuellen Betriebszustand der linken Sprühdüsen DL1, DL2 und DL3 des linken Sprüharms L wieder und der rechte Anzeigebereich 12R gibt den Zustand der rechten Sprühdüsen DR1, DR2 und DR3 des rechten Sprüharms R wieder. Um eine Datenkommunikation zwischen der Erfassungseinheit 10 und dem Anzeigemittel 12 aufzubauen, ist beispielhaft eine Bluetoothschnittstelle 15 vorgesehen, sodass die Datenkommunikation zwischen der Erfassungseinheit 10 und dem Anzeigemittel 12 drahtlos erfolgt.

Ist beispielsweise auf der Seite des rechten Sprüharms R eine der Sprühdüsen DR1, DR2 oder DR3 verstopft, so erfolgt erfindungsgemäß auf dem Anzeigemittel 12, nämlich auf der Oberfläche der softwarebasierten Anwendung 14, die Ausgabe eines Signals 11, das von einem Bediener der Spritzmitteleinrichtung 100 insbesondere visuell unmittelbar erfasst werden kann. Der Vorteil liegt darin, dass es hinreichend ist, das Anzeigemittel 12 in dem Sichtbereich des Bedieners zu platzieren, sodass dieser das Signal 11 unmittelbar wahrnehmen kann. Zudem ist beispielhaft ein Lautsprecher 18 dargestellt, sodass das Signal zusätzlich akustisch erfolgen kann.

Durch die Ausbringung des Signals 11 auf dem rechten Anzeigebereich 12R wird dem Bediener unmittelbar und ohne zeitliche Verzögerung in der Wahrnehmbarkeit mitgeteilt, dass eine Störung in einer der Sprühdüsen DR1, DR2 oder DR3 vorliegen muss. Hierzu ist erfindungsgemäß vorgesehen, dass ein Vergleich herangezogen wird von der Durchflussmenge sämtlicher am linken Sprüharm L installierten Sprühdüsen DL1, DL2 und DL3 mit den sämtlichen am rechten Sprüharm R installierten Sprühdüsen DR1, DR2 und DR3.

Wird beim Vergleich der erfassten durchfließenden Spritzmittelmengen des linken Sprüharms L und des rechten Sprüharms R erkannt, dass die Durchflusswerte voneinander abweichen, so wird unmittelbar das Signal 11 ausgegeben. Folglich kann der Bediener in Echtzeit reagieren, beispielsweise kann dieser das Fahrzeug anhalten und die Spritzmitteleinrichtung 100 außer Betrieb setzen.

Alternativ oder additiv kann in der Spritzmittelleitung 3 nach der Verzeigung 4 zu jeder Seite jeweils ein Durchflusssensor 5, 6 angeordnet sein. Diese beiden Durchflusssensoren 5, 6 stehen mit der Erfassungseinheit 10 datenübertragend in Verbindung. Das heißt, die Durchflusssensoren 5, 6 können zusätzlich oder alternativ zu den Durchflusssensoren 13L, 13R vorgesehen sein.

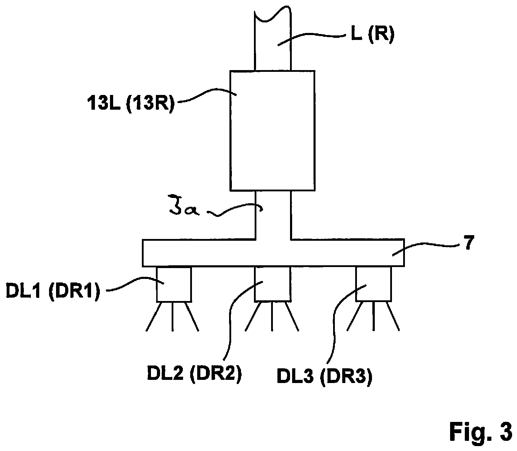

Fig. 3 zeigt in einer Variante zu Fig. 1, wie jeweils einem Durchflusssensor 13L, 13R mehrere Sprühdüsen DL1, DL2, DL3; DR1, DR2, DR3 zugeordnet sind. Hierzu sind anstelle einer oder mehrerer Sprühdüsen an einem linken oder rechten Sprüharm L, R, wie in Fig. 1 dargestellt, Düsenarme 7 mit mehreren Sprühdüsen DL1 - DL3; DR1 - DR3 vorgesehen, die jeweils einem Durchflusssensor 13L, 13R örtlich nachgeordnet sind. Das heißt, hier wird eine einzelne Sprühdüse durch eine Mehrzahl von Sprühdüsen ersetzt und zwar durch jeweils einen Düsenarm 7, an dem die mehreren Sprühdüsen DL1 - DL3; DR1 - DR 3 angeordnet sind. Die Durchflusssensoren 13L, 13R können hierbei zusätzlich erhalten bleiben, um nach wie vor auf einfache Art und Weise zu ermitteln, ob bei einem Sprüharm L, R eine oder mehrere Sprühdüsen fehlerhaft sind. Diese Düsenarme 7 sind an Zweigleitungen 3a, die von der Spritzmittelleitung 3 abgehen, angeordnet.

Fig. 2 zeigt in einer schematischen Ansicht den linken Sprüharm L und den rechten Sprüharm R mit den zugeordneten linken Sprühdüsen DL1, DL2, DL3 und den zugeordneten rechten Sprühdüsen DR1, DR2, DR3. In den jeweiligen Sprüharmen L und R befinden sich in der Ansicht nicht dargestellte Durchflusssensor, die die Durchflusswerte durch die Sprühdüsen an die Erfassungseinheit 10 übermitteln. Diese übermittelt die Werte mittels der Bluetoothschnittstelle 15 an das Anzeigemittel 12 mit dem linken Anzeigebereich 12L und dem rechten Anzeigebereich 12R, und erfolgt beispielsweise eine Störung und damit eine Mindermenge an Durchfluss im rechten Sprüharm R, so wird auch auf dem rechten Anzeigebereich 12R ein vorzugsweise optisches Signal 11 ausgegeben, das auch über den Lautsprecher 18 zusätzlich akustisch erfolgen kann. Damit erhält der Bediener bereits auf der Grund-Oberfläche der softwarebasierten Anwendung eine direkte Information über eine Störung der Spritzmitteleinrichtung 100 und kann entsprechende Maßnahmen einleiten. Insbesondere ist es nicht notwendig, sämtliche Durchflusswerte der Sprühdüsen miteinander zu vergleichen, um dann erst zu erkennen, dass eine Störung vorliegt. Der Vergleich der Durchflussmengen in den Sprüharmen L und R erfolgt vorzugsweise mittels der auf dem Anzeigemittel 12, das beispielsweise ein Smartphone ist, betreibbaren softwarebasierten Anwendung 14.

Die Ausführungen zu Fig. 2 gelten sinngemäß auch für eine Ausführungsform bei der Durchflusssensoren 5, 6 entweder alternativ zu den Durchflusssensoren 13L, 13R oder additiv zu diesen vorgesehen sind.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich, als auch in den verschiedensten Kombinationen erfindungswesentlich sein.

### Bezugszeichen liste:

- 100: Spritzmitteleinrichtung
- 1: Spritzmittel
- 3: Spritzmittelleitung
- 3a: Zweigleitung
- 4: Verzweigung
- 5: Durchflusssensor
- 6: Durchflusssensor
- 7: Düsenarm
- 10: Erfassungseinheit
- 11: Signal
- 12: Anzeigemittel
- 12L: linker Anzeigebereich
- 12R: rechter Anzeigebereich
- 13L: linker Durchflusssensor
- 13R: rechter Durchflusssensor
- 14: softwarebasierte Anwendung
- 15: Bluetoothschnittstelle
- 16: Tank
- 17: Pumpe
- 18: Lautsprecher
- 19: Gewächs
- L: linker Sprüharm
- R: rechter Sprüharm

- DL1-DL3: linke Sprühdüse
- DR1-DR3: rechte Sprühdüse

## Patentansprüche

1. Verfahren zur Überwachung einer mittels einer Spritzmitteleinrichtung (100) ausgebrachten Menge an Spritzmittel (1), insbesondere eines Spritzmittels (1) zum Auftrag auf in Reihe stehenden Gewächsen (19) wie Weinpflanzen, Obstpflanzen und dergleichen, wofür die Spritzmitteleinrichtung (100) in Verbindung mit einem fahrenden Fahrzeug betrieben wird und das Spritzmittel (1) mit mindestens einem linken Sprüharm (L), aufweisend wenigstens eine linke Sprühdüse (DL1, DL2, DL3), und mit mindestens einem rechten Sprüharm (R), aufweisend wenigstens eine rechte Sprühdüse (DR1, DR2, DR3), auf die Gewächse (19) aufgebracht wird, und wobei das Verfahren wenigstens die folgenden Schritte aufweist:
- Erfassen einer über den mindestens einen linken Sprüharm (L) aktuell austretenden Spritzmittelmenge und einer über den mindestens einen rechten Sprüharm (R) aktuell austretenden Spritzmittelmenge durch jeweils mindestens einen Durchflusssensor (13L; 13R),
- Bereitstellen einer Erfassungseinheit (10),
- Erfassen der über den mindestens einen linken Sprüharm (L) und der über den mindestens einen rechten Sprüharm (R) durch den jeweiligen Durchflusssensor (13L; 13R) gemessenen Spritzmittelmengen mit der Erfassungseinheit (10),
- Vergleich der gemessenen Spritzmittelmenge des mindestens einen linken Sprüharms (L) mit der gemessenen Spritzmittelmenge des mindestens einen rechten Sprüharms (R) und
- Erzeugen eines Signals (11) auf einem Anzeigemittel (12), wenn der Wert der Spritzmittelmenge des mindestens einen linken Sprüharms (L) und der Wert der Spritzmittelmenge des mindestens einen rechten Sprüharms (R) voneinander abweichen.

2. Verfahren nach Anspruch 1,
**dadurch gekennzeichnet,**
**dass** das Erzeugen des Signals (11) auf dem Anzeigemittel (12) in Echtzeit mit den gemessenen Spritzmittelmengen erfolgt.

3. Verfahren nach Anspruch 1 oder 2,
**dadurch gekennzeichnet,**
**dass** das Anzeigemittel (12) einen linken Anzeigebereich (12L) und einen rechten Anzeigebereich (12R) aufweist, wobei das ausgegebene Signal (11) auf dem Anzeigebereich (12L, 12R) erzeugt wird, auf dem eine Mindermenge an Spritzmitteldurchfluss vorherrscht.

4. Verfahren nach einem der Ansprüche 1 bis 3,
**dadurch gekennzeichnet,**
**dass** das Signal (11) mittels eines farbigen Feldes, insbesondere eines farbigen Bereiches angezeigt wird, wobei das Signal (11) mit einem Dauerfarbbereich oder mit einem blinkenden Farbbereich und/oder mit einem akustischen Signal mittels eines Lautsprechers (18) des Anzeigemittels (12) zur Anzeige gebracht wird.

5. Verfahren nach einem der voranstehenden Ansprüche,
**dadurch gekennzeichnet,**
**dass** eine Spritzmittelleitung (3) vorgesehen ist, wobei die Spritzmittelleitung (3) eine Verzweigung (4) aufweist, wobei die Spritzmittelleitung (3) vor den Sprühdüsen (DL1 - DL3; DR1 - DR3) und nach der Verzweigung (4) jeweils einen einzigen Durchflusssensor (5, 6) aufweist.

6. Verfahren nach einem der vorgenannten Ansprüche,
**dadurch gekennzeichnet,**
**dass** am mindestens einen linken Sprüharm (L) mehrere Sprühdüsen (DL1, DL2, DL3) und am mindestens einen rechten Sprüharm (R) mehrere Sprühdüsen (DR1, DR2, DR3) vorhanden sind, denen jeweilige Durchflusssensor (13L, 13R) zugeordnet sind, wobei die Durchflusswerte der mehreren linken Durchflusssensor (13L) zur einem Gesamtwert addiert werden und die Durchflusswerte der mehreren rechten Durchflusssensor (13R) zur einem Gesamtwert addiert werden, sodass beide Gesamtwerte mittels der Erfassungseinheit (10) erfasst und verglichen werden.

7. Verfahren nach einem der vorgenannten Ansprüche,
**dadurch gekennzeichnet,**
**dass** die Einzelwerte der mit den Durchflusssensoren (13L, 13R) aktuell erfassten Spritzmittelmengen auf dem Anzeigemittel (12) in Echtzeit angezeigt werden.

8. Verfahren nach einem der vorgenannten Ansprüche,
**dadurch gekennzeichnet,**
**dass** das Anzeigemittel (12) mittels eines handhaltbaren elektronischen Gerätes, insbesondere eines Smartphones oder eines Tablet-PC, bereitgestellt wird, wobei auf dem Anzeigemittel (12) eine softwarebasierte Anwendung (14), eine sogenannte App, betrieben wird.

9. Verfahren nach einem der vorgenannten Ansprüche,
**dadurch gekennzeichnet,**
**dass** die Erfassungseinheit (10) die Werte der Spritzmittelmengen drahtlos und/oder mittels einer Bluetoothschnittstelle (15) an das Anzeigemittel (12) überträgt.

10. Verfahren nach einem der Ansprüche 8 oder 9,
**dadurch gekennzeichnet,**
**dass** der Vergleich der erfassten Spritzmittelmengen mittels der Erfassungseinheit (10) oder mittels der auf dem Anzeigemittel (12) betriebenen softwarebasierte Anwendung (14) ausgeführt wird.

11. Spritzmitteleinrichtung (100) zum Auftrag einer Menge an Spritzmittel (1) auf in Reihe stehenden Gewächsen (19) wie Weinreben, Obstpflanzen und dergleichen, wofür mindestens ein linker Sprüharm (L) aufweisend wenigstens eine linke Sprühdüse (DL1, DL2, DL3) und mindestens ein rechter Sprüharm (R) aufweisend wenigstens eine rechte Sprühdüse (DR1, DR DR3) zum Auftrag des Spritzmittels (1) auf die Gewächse (19) vorgesehen ist,
**dadurch gekennzeichnet,**
**dass**
- eine Erfassungseinheit (10) vorgesehen und dazu eingerichtet ist, die über den mindestens einen linken Sprüharm (L) durch mindestens einen ersten Durchflusssensor (13L; 5) gemessene austretende Spritzmittelmenge und die über den rechten Sprüharm (R) durch mindestens einen zweiten Durchflusssensor (13R; 6) gemessene austretende Spritzmittelmenge zu erfassen, wobei weiterhin
- ein Anzeigemittel (12) bereitgestellt ist, an das die erfassbaren Spritzmittelmengen von den ersten und zweiten Durchflusssensoren (13L, 13R; 5, 6) übermittelbar sind, wobei
- die Erfassungseinheit (10) eine Vergleicherschaltung aufweist, wobei
- die Spritzmittelmenge des mindestens einen linken Sprüharms (L) mit der Spritzmittelmenge des mindestens einen rechten Sprüharms (R) in der Vergleicherschaltung verglichen wird und wobei
- mittels des Anzeigemittels (12) ein Signal (11) ausgebbar ist, wenn der Wert der Spritzmittelmenge des mindestens einen linken Sprüharms (L) und des mindestens einen rechten Sprüharms (R) voneinander abweichen.

12. Spritzmitteleinrichtung (100) nach Anspruch 11,
**dadurch gekennzeichnet,**
**dass** die Erfassungseinrichtung (10) mit den mindestens zwei Durchflusssensoren (13L, 13R; 5, 6) verbunden ist.

13. Spritzmitteleinrichtung (100) nach Anspruch 12,
**dadurch gekennzeichnet,**
**dass** die Spritzmitteleinrichtung (100) eine Spritzmittelleitung (3) mit einer Verzweigung (4) umfasst, wobei jeweils mindestens ein Durchflusssensor (13L, 13R; 5, 6) nach der Verzweigung (4), aber vor den Sprühdüsen (DL1 - DL3; DR1 - DR3) des mindestens einen linken Sprüharms (L) und des mindestens einen rechte Sprüharms (R) in der Spritzmittelleitung (3) angeordnet ist.

14. Spritzmitteleinrichtung (100) nach Anspruch 11 bis 13,
**dadurch gekennzeichnet,**
**dass** mindestens ein Durchflusssensor (13L, 13R; 5, 6) die austretende Spritzmittelmenge mehrerer Spritzdüsen (DL1 - DL 3; DR1 - DR3) erfasst.

15. Spritzmitteleinrichtung (100) nach Anspruch 14,
**dadurch gekennzeichnet,**
**dass** ein Sprüharm (L; R) mehrere Düsenarme (7) aufweist, wobei an einem Düsenarm (7) mehrere Sprühdüsen (DL1 - DL3; DR1 - DR3) angeordnet sind, wobei der mindestens Durchflusssensor (13L; 13R) den mehreren Sprühdüsen örtlich vorgelagert ist.
